# FASCICULE DE BREVET EUROPEEN

(11) **EP 4 522 469 B1**
(45) Date de publication et mention de la délivrance du brevet: **28.01.2026**
(21) Numéro de dépôt: 23724794.5
(22) Date de dépôt: 04.05.2023
(51) Int. Cl.: B60T 13/74, F16D 55/226, F16D 65/00, F16D 65/18

(54) **ACTIONNEUR ÉLECTRIQUE DE FREIN À DISQUE AVEC REDUCTEUR DIFFERENTIEL AMORTI EN VIBRATIONS, COMPOSANTS, FREIN ET PROCÉDÉ D'ASSEMBLAGE**
ELEKTRISCHER SCHEIBENBREMSANTRIEB MIT SCHWINGUNGSDÄMPFTEM DIFFERENTIALREDUZIERGERÄT, KOMPONENTEN, BREMSE UND MONTAGEVERFAHREN
ELECTRIC DISC BRAKE ACTUATOR WITH VIBRATION DAMPED DIFFERENTIAL REDUCER, COMPONENTS, BRAKE AND ASSEMBLY METHOD

(30) Priorité: 13.05.2022 FR 2204585
(43) Date de publication de la demande: 19.03.2025
(73) Titulaire: Astemo France, 93700 Drancy (FR)
(72) Inventeur: BOURLON, Philippe, 77230 DAMMARTIN EN GOELE (FR); CUBIZOLLES, Cyril, 93700 DRANCY (FR)
(74) Mandataire: IPAZ
(86) Numéro de dépôt international: PCT/EP2023/061841
(87) Numéro de publication internationale: WO 2023/217629

(56) Documents cités:
- EP-A1- 2 824 354
- KR-B1- 101 592 825

## Description

L'invention se rapporte à un réducteur ou motoréducteur rotatif d'entraînement, au sein d'un actionneur électrique de frein. Il comprend un ou plusieurs trains épicycloïdaux parallèles et/ou coaxiaux à la direction d'actionnement linéaire, qui sont dotés d'au moins une couronne fixe en rotation.

Ce réducteur comprend en outre un dispositif d'amortissement réalisé au moins en partie en matériau élastomère, disposé autour de ladite couronne fixe, comprimé radialement et/ou axialement entre couronne fixe et boîtier de frein, réalisant ainsi un amortissement vibratoire radial et/ou axial entre eux.

Typiquement, le réducteur un train épicycloïdal différentiel entraîné par son pignon planétaire avec satellites engrenant simultanément sur la couronne fixe et une couronne mobile. Celle-ci entraîne l'écrou d'un mécanisme vis-écrou réversible, qui produit l'effort linéaire. L'irréversibilité globale est produite par le train différentiel.

L'invention concerne aussi un composant déterminé pour réaliser l'amortisseur de ce réducteur, un groupe moteur incluant cet amortisseur, un frein et son procédé d'assemblage.

### ETAT DE LA TECHNIQUE

Dans le domaine des actionneurs électriques de frein, en particulier pour véhicules routiers, notamment automobiles légers ou utilitaires, il a été proposé différentes architectures de réducteurs et motoréducteurs.

Pour fournir l'effort linéaire nécessaire au serrage du patin de freinage, il est souvent proposé d'utiliser un réducteur comprenant un ou plusieurs trains épicycloïdaux, entraîné par un moteur électrique rotatif classique, par exemple à courant continu et commutation électronique ("brushless") ou par contacts de balais. De tels trains épicycloïdaux comprennent au moins un pignon planétaire central entraînant des pignons satellites qui tournent autour de lui et engrènent à la fois avec le pignon planétaire et avec la denture interne d'une couronne.

Ils sont par exemple entraînés en entrée par le pignon planétaire, tandis que les satellites prennent appui sur une couronne fixe pour fournir en sortie une rotation par un porte-satellites.

Dans certaines configurations, par exemple dans le document US4804073, un même groupe de satellites engrène simultanément avec une couronne fixe et une couronne mobile, lesquelles ont un nombre de dents différents l'une de l'autre. Du fait de cette différence, on obtient en sortie une rotation de la couronne mobile avec un taux de réduction très élevé. Dans ce document le moteur est monté "en bout", coaxial au réducteur différentiel.

Dans d'autres documents, comme par exemple le document FR2999257A1, l'axe du moteur est parallèle et décalé latéralement par rapport à la sortie du réducteur.

Ces architectures présentes cependant des limites et des inconvénients sur plusieurs plans, par exemple avec un encombrement axial ou latéral important, qui peut rendre difficile leur intégration dans un véhicule. De plus, les vibrations créées dans le motoréducteur constituent une source de bruit et d'usure qui peuvent être préjudiciables au confort ou à la fiabilité.

Dans le document FR3053422, il a été proposé d'ajouter un amortisseur extérieur sur le couvercle du moteur ou sur le boîtier du motoréducteur. Ce type de solution présente cependant des inconvénients, par sa complexité et son encombrement, voire lors du montage ou de fragilité à l'utilisation.

Un but de l'invention est de pallier en tout ou partie les inconvénients de l'art antérieur. Il est recherché en particulier de minimiser le bruit émis par le frein et l'usure due aux vibrations, tout en limitant l'encombrement, la fragilité, la souplesse d'intégration et d'adaptation, la complexité de fabrication ou de montage, ou d'optimiser les compromis disponibles entre ces facteurs.

On connait par ailleurs du document EP 2 824 354 un dispositif de réducteur ou motoréducteur rotatif d'entraînement au sein d'un actionneur électrique de frein réalisant un déplacement linéaire d'un piston de frein, ledit dispositif étant intégré dans un boîtier de frein et comprenant un ou plusieurs trains épicycloïdaux parallèles ou coaxiaux à la direction d'actionnement linéaire qui utilisent au moins une couronne fixe en rotation par rapport audit boîtier de frein, comprenant un dispositif d'amortissement réalisé au moins en partie en matériau élastomère et disposé autour de la transmission primaire.

### PRESENTATION DE L'INVENTION

L'invention propose un dispositif de réducteur ou motoréducteur rotatif d'entraînement au sein d'un actionneur électrique de frein réalisant un déplacement linéaire d'un piston de frein, ledit dispositif étant intégré dans un boîtier de frein ou prévu pour être assemblé sur un tel boîtier de frein, dans lequel :
ledit dispositif comprend un ou plusieurs trains épicycloïdaux parallèles ou coaxiaux à la direction d'actionnement linéaire,
qui utilisent au moins une couronne fixe en rotation par rapport audit boîtier de frein.

Selon l'invention, ce dispositif comprend :
un dispositif d'amortissement
réalisé au moins en partie en matériau élastomère,
qui est disposé autour de ladite couronne fixe ou prévu pour être disposé ainsi,
de façon à être comprimé radialement et/ou axialement entre ladite couronne fixe et ledit boîtier de frein, et
réalisant ainsi un amortissement vibratoire radial et/ou axial entre ladite couronne fixe et ledit boîtier de frein.

Selon une particularité, la surface intérieure et/ou extérieure du dispositif d'amortissement porte une ou plusieurs nervures périphériques dépassant radialement qui sont comprimées radialement une fois en place, notamment dont chacune présente une continuité sur toute la périphérie de façon à produire une étanchéité axiale.

Selon une autre particularité le dispositif d'amortissement comprend un manchon cylindrique, typiquement circulaire, entourant la couronne fixe ou son support, et qui présente une collerette d'appui axial A1, A2 à une extrémité dudit cylindre ou à ses deux extrémités, de façon à être comprimé axialement entre ladite couronne fixe et ledit boîtier de frein.

Plus particulièrement, au moins une collerette d'appui axial A1 présente, sur sa surface extérieure, une ou plusieurs lèvres A11, A12 A31 et A32 s'étendant au moins axialement, notamment présentant une continuité sur toute la périphérie de façon à produire une étanchéité radiale.

Optionnellement, le dispositif d'amortissement comprend une armature intérieure noyée dans l'élastomère et présentant une rigidité et/ou élasticité supérieure à celle de l'élastomère, notamment une armature métallique.

Selon encore une autre particularité, la couronne fixe est maintenue en rotation par un boîtier moteur qui porte à lui seul, directement ou indirectement un moteur électrique entraînant le réducteur, lequel boîtier moteur forme une pièce rapportée qui est assemblée au boîtier de frein de façon à mettre en compression le dispositif d'amortissement.

Selon une famille de modes de réalisation préférés, le dispositif selon l'invention comprend un réducteur planétaire dit différentiel, qui est coaxial au moteur et est entraîné en entrée par un pignon planétaire, qui entraîne un groupe de satellites qui engrènent chacun à la fois sur la couronne fixe et sur une couronne mobile, lesquelles couronnes portent des nombres de dents différents l'une de l'autre. En sortie, cette couronne mobile entraîne en rotation un mécanisme vis-écrou, notamment réversible, qui produit un entraînement linéaire d'un piston de frein entre une position rétractée et une position sortie, de façon à exercer un appui linéaire dans une direction dite avant pour produire un effort de serrage sur un disque entre des patins de serrage.

Selon une particularité avantageuse, le réducteur planétaire différentiel entraîne en rotation un mécanisme vis-écrou agencé pour être réversible, lequel transforme ladite rotation en un déplacement linéaire appliqué au piston de frein.

Selon une autre particularité avantageuse, la couronne mobile du réducteur planétaire différentiel entraîne en rotation l'écrou du mécanisme vis-écrou, lequel écrou est maintenu en translation par un épaulement formé dans un logement du boîtier d'étrier ; tandis que sa vis est maintenue immobile en rotation par le piston de frein, et est ainsi entraînée en translation par la rotation dudit écrou.

Selon d'autres aspects, l'invention propose en outre :
Un dispositif d'amortissement agencé pour réaliser le dispositif d'amortissement d'un dispositif de réducteur ou motoréducteur tel qu'exposé ici.
Un dispositif de motoréducteur pour actionneur de frein, caractérisé en ce qu'il comprend un dispositif de réducteur ou motoréducteur tel qu'exposé ici.
Un frein à disque pour véhicule routier, notamment de type coulissant ou flottant pour véhicule routier ou automobile, caractérisé en ce qu'il comprend un dispositif de réducteur ou motoréducteur tel qu'exposé ici.

Encore selon un autre aspect, l'invention propose un procédé d'assemblage d'un frein pour véhicule, notamment automobile routier, caractérisé en ce qu'il comprend :
montage sur un boîtier moteur d'un moteur électrique portant un arbre de pignon planétaire formant ainsi un groupe moteur, ou fourniture d'un tel groupe moteur ; et
assemblage du boîtier moteur dudit groupe moteur sur le boîtier de frein,
en montant entre eux un ou plusieurs trains épicycloïdaux parallèles ou coaxiaux formant un réducteur tel qu'exposé ici, dont la couronne fixe est maintenue en rotation par ledit boîtier moteur,
de façon à ce que le dispositif d'amortissement soit comprimé radialement et/ou axialement entre ledit boîtier de frein et la couronne fixe ou son support.

On notera en particulier, l'invention permet ainsi une réduction du bruit et de l'usure causés dans la structure rigide de l'étrier de frein par le fonctionnement d'un actionneur électrique à trains épicycloïdaux. Elle est particulièrement pertinente dans le cas d'un tel réducteur différentiel, qui permet une compacité et une grande capacité d'effort et de course, tout en facilitant le montage et/ou la maintenance.

### BREVE DESCRIPTION DES DESSINS

D'autres particularités et avantages de l'invention ressortiront de la description détaillée d'un mode de mise en œuvre nullement limitatif, et des dessins annexés sur lesquels :
[Fig.1] : la Fig.1 est une vue à l'échelle en coupe longitudinale qui illustre un étrier de frein à disque coulissant avec actionneur électrique utilisant le dispositif d'amortissement de la Fig.3, représenté sans le capot ni l'électronique du moteur, selon un exemple de mode de réalisation avec le pignon d'entrée sur un arbre moteur monté dans le stator ;
[Fig.2] : la Fig.2 est une vue à l'échelle en coupe longitudinale, qui illustre un étrier de frein à disque coulissant avec actionneur électrique utilisant le dispositif d'amortissement de la Fig.3, selon une variante de l'exemple de la Fig.1, avec un boîtier moteur emboîté autour du logement de boîtier d'étrier ;
[Fig.3] : la Fig.3 est une vue à l'échelle, en coupe longitudinale, qui représente le dispositif d'amortissement utilisé dans un exemple de mode de réalisation de l'invention,
[Fig.4] : la Fig.4 est un schéma en coupe longitudinale qui illustre un actionneur, dans sa cinématique et la répartition de ses pièces principales, de l'exemple de la Fig.2 ;
[Fig.5] : la Fig.5 est une isométrie avec arrachement partiel du motoréducteur de la Fig.2 représenté sans le capot ni l'électronique du moteur ;
[Fig.6] : la Fig.6 est un schéma en coupe longitudinale qui illustre un actionneur dans sa cinématique et la répartition des pièces principales, selon une variante de l'exemple de la Fig.4 dans laquelle le rotor est monté sur un palier extérieur ;
[Fig.7] : la Fig.7 est un schéma en coupe longitudinale qui illustre un actionneur dans sa cinématique et la répartition des pièces principales, selon une variante de l'exemple de la Fig.6 dans laquelle le palier de rotor et la couronne fixe sont montés sur un même tube, lequel forme un élément de centrage commun qui est par exemple assemblé avec le boîtier moteur ;
[Fig.8] : la Fig.8 est une isométrie qui illustre un exemple de frein à disque selon l'exemple de mode de réalisation des Fig.2 Fig.4 et Fig.5, ou de la Fig.7 ou de la Fig.8 ;
[Fig.9] : la Fig.9 est une vue éclatée en perspective et à l'échelle qui illustre un exemple d'assemblage de l'actionneur des Fig.2 et 4 à Fig.8.

### DESCRIPTION D'EXEMPLES DE MODES DE REALISATION

Les exemples de modes de réalisation présentés ici sont appliqués à des actionneurs électriques d'étrier de frein à disque coulissant, dans lesquels le réducteur est de type épicycloïdal différentiel, avec des satellites engrenant à la fois sur une couronne fixe et sur une couronne mobile, laquelle entraîne l'écrou d'un mécanisme vis-écrou réversible réalisé avec une vis à billes 313.

L'invention est cependant aussi prévue pour être appliquée aussi à des vis-écrou non réversibles, ou à des trains épicycloïdaux non différentiels comprenant au moins une couronne fixe. Le dispositif amortisseur de couronne fixe est alors monté de façon similaire et/ou avec des adaptations accessibles à l'homme du métier.

### Premier mode de réalisation

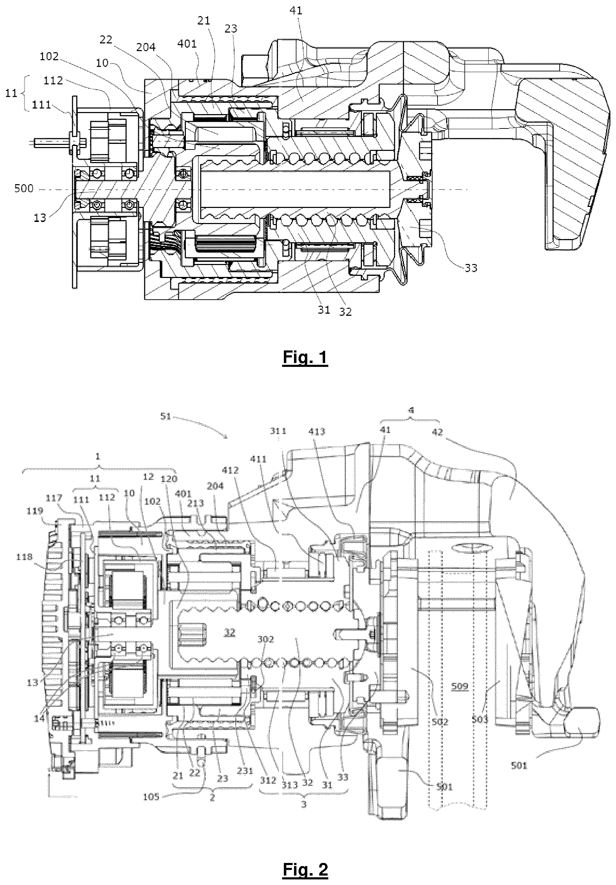

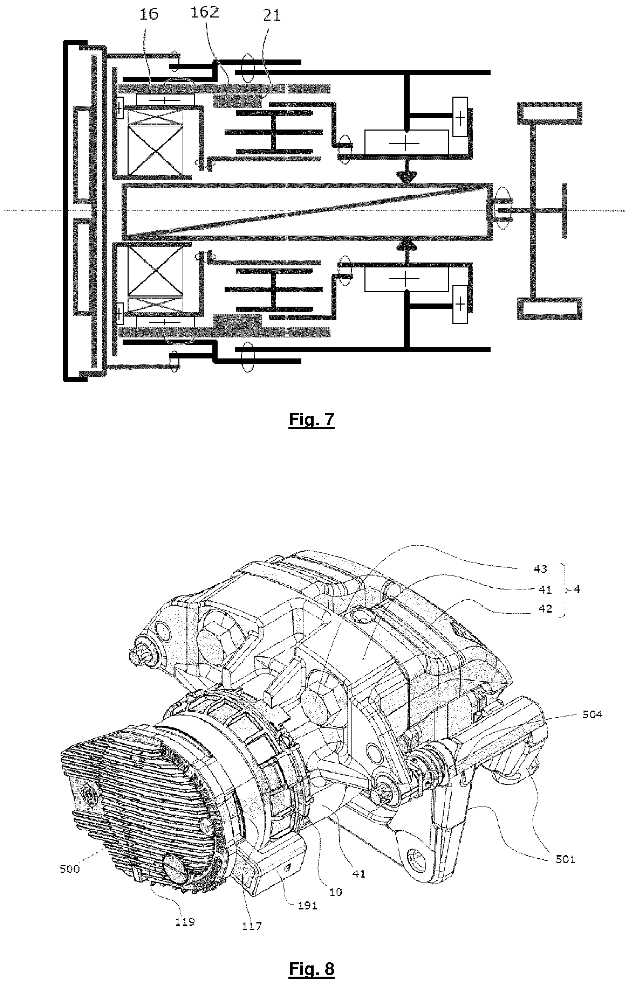

Les Fig.2 à Fig.9 illustrent des exemples de frein à disque à étrier flottant avec actionneur électrique, dans lesquels le pignon d'entrée est solidaire d'un arbre 13 monté dans le stator d'un moteur 11.

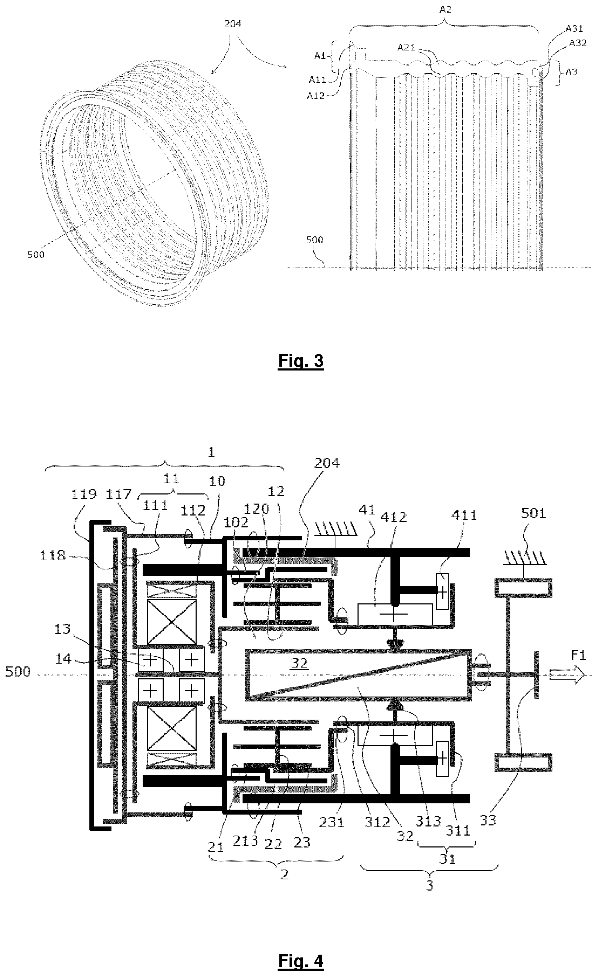

La cinématique et la constitution de l'exemple de la Fig. 2 sont illustrées par le schéma de la Fig.4. La cinématique de l'exemple de la Fig.2 est aussi conforme au schéma de la Fig.4.

Dans l'exemple des Fig.2 et Fig.4, le moteur 1 est du type à stator intérieur 111 et un rotor extérieur 112, ou "out-runner" en vocabulaire anglo-saxon, ici à titre d'exemple un moteur à courant continu avec aimants permanents dans le stator et enroulements magnétiques dans le stator. D'autres types de moteurs connus sont cependant prévus aussi, par exemple un type classique à rotor intérieur et stator extérieur.

Le rotor 112 est solidaire d'un pignon planétaire d'entrée 12, lequel comprend un arbre 13 qui est guidé en rotation des roulements 14 montés à l'intérieur de la partie tubulaire du stator 111.

La couronne fixe 21 est fixée au boîtier moteur 10, ici par emmanchement à l'intérieur d'une jupe 102 dépassant axialement du boîtier moteur du côté avant. Dans cet exemple, l'emmanchement est serré et l'anti-rotation est réalisé par coopération de formes, ici des excroissances axiales 211 qui dépassent de la couronne fixe et coopèrent avec des vides ménagés dans la jupe 102. Une fois l'ensemble assemblé, la couronne fixe 21 est emboîtée dans un alésage à l'entrée du logement de boîtier de frein 410.

Le pignon planétaire d'entrée 12 engrène avec un groupe de satellites 22, qui sont maintenue dans des cages d'une bague porte-satellites 220.

Ces satellites 22 ont une longueur suffisante pour engrener chacun à la fois avec la couronne fixe 21 et avec une couronne mobile 23 qui est coaxiale et décalée axialement par rapport à ladite couronne fixe. Dans cet exemple, la couronne fixe 21 et la couronne mobile 23 ont le même diamètre intérieur et présentent toutes deux un module compatible avec la denture des satellites, laquelle est identique sur toute la longueur desdits satellites.

Dans cet exemple, la couronne mobile 23 est guidée en rotation, par exemple par frottement lubrifié, à l'intérieur d'une jupe 213 qui dépasse axialement de la couronne fixe 21 et lui est coaxiale.

La couronne mobile 23 présente un nombre de dents qui diffère de la couronne fixe 21, d'un faible nombre de dents, par exemple de 4 à 5. Elle engrène sur les satellites 22 qui prennent appui sur la couronne fixe 21, ici avec la même denture, de sorte que la couronne mobile 23 est entraînée en rotation par lesdits satellites avec une vitesse très réduite par rapport à la vitesse du pignon planétaire d'entrée 12.

Dans cet exemple, le moteur 11 est fixé dans un boîtier moteur 10, qui est distinct du boîtier d'étrier 41. Le boîtier moteur 10 présente une jupe axiale qui s'étend vers le côté avant, et s'emboîte autour d'une partie 401 du boîtier de frein 41 qui forme un manchon s'étendant du côté arrière. Cet emboîtement entre jupe et manchon 401 réalise le maintien du boîtier moteur 10 sur le boîtier d'étrier 41, ici avec engagement de formes anti-rotation et retenue en translation par un circlip externe 105.

Le stator 111 du moteur 11 est fixé par pincement entre un épaulement du boîtier moteur 10 et un épaulement d'un couvercle intermédiaire 117, lequel porte aussi une carte électronique 118 qui commande le moteur et intègre une électronique de puissance alimentant les enroulements. Ce couvercle intermédiaire 117 est fermé à son extrémité arrière par un couvercle 119 formant radiateur thermique avec l'air extérieur, pour évacuer par des ailettes la chaleur émise par la carte électronique 118. Ce couvercle radiateur 119, par exemple en alliage d'aluminium moulé par exemple par injection sous pression, est en contact avec les composants chauds de la carte électronique 118, typiquement par l'intermédiaire d'une pâte thermiquement conductrice.

La couronne fixe 21 est disposée dans un alésage à l'intérieur du manchon 401 qui entoure le logement de boîtier de frein 410. La couronne fixe y est maintenue radialement par l'intermédiaire d'un amortisseur cylindrique 204 à amortissement radial. Cet amortisseur est ici formé par un matériau élastomère, dont la partie cylindrique porte une pluralité de nervures circonférentielles, qui sont comprimées entre l'alésage du logement 410 et la surface de la jupe 213 de la couronne fixe 21, assurant étanchéité et amortissement radial.

Du côté avant, l'extrémité de l'amortisseur 204 s'étend radialement vers l'intérieur par un rétrécissement annulaire qui s'interpose entre l'extrémité avant de la couronne fixe 21 et un épaulement du logement 410 du boîtier d'étrier 41. De façon avantageuse, ce rétrécissement annulaire présente des lèvres concentriques, ici vers l'avant, qui sont comprimées pour concourir à l'étanchéité et à l'amortissement axial.

Du côté arrière, l'extrémité de l'amortisseur 204 s'étend radialement vers l'extérieur par une collerette annulaire qui s'interpose entre l'extrémité arrière du manchon 401 du boîtier d'étrier 41 et une rainure annulaire du boîtier moteur 10. De façon avantageuse, cette collerette annulaire présente des lèvres concentriques, ici vers l'arrière, qui sont comprimées pour concourir à l'étanchéité et à l'amortissement axial.

Dans cet exemple, des lèvres A31 et A32 de la collerette d'appui avant A3 viennent en appui sur une rondelle de glissement 402, libre en rotation et qui s'appuie axialement sur un épaulement formé dans le logement d'étrier 410. L'extrémité avant du dispositif d'amortissement 204 peut aussi s'appuyer directement sur un tel épaulement.

Ainsi, la couronne fixe 21 est maintenue au sein du groupe moteur 1 par le boîtier moteur 10, et l'amortisseur 204 permet un amortissement pour éviter la transmission directe des vibrations depuis la couronne et possiblement le boîtier moteur 10 vers le boîtier d'étrier 41.

La couronne mobile 23 présente côté avant un alésage qui porte des rainures longitudinales 231. Elles entraînent en rotation l'écrou 31 du mécanisme vis-écrou 3, par des rainures longitudinales 312 que cet écrou 31 porte sur sa surface extérieure.

L'écrou 31 du mécanisme vis-écrou est fixe en translation et est entraîné en rotation par la couronne mobile 23, et coopère avec la vis 32 fixe en rotation pour déplacer ladite vis en translation.

La rotation de l'écrou 31 produit ainsi un entraînement linéaire de la vis 32, dans le sens du serrage F1 ou dans le sens inverse du retrait selon le sens de rotation du moteur.

L'écrou 31 est guidé en rotation par un roulement 412, ici à rouleaux, monté à l'intérieur d'un alésage 410 ménagé dans le boîtier d'étrier 41. Il est immobilisé en translation axiale, dans le sens du serrage, par butée contre une face d'appui axial d'un épaulement du boîtier d'étrier 41 dirigée du côté avant, par l'intermédiaire d'un palier à roulements 411 à rouleaux disposé entre cet épaulement et une collerette d'appui 311 qui entoure l'écrou 32.

Cette vis 32 du mécanisme vis-écrou 3 est solidaire d'une platine d'appui 33 jouant le rôle d'un piston de frein, qui transmet l'actionnement linéaire à au moins un patin de serrage 502, pour produire un effort de serrage F1 sur un disque 509 entre des patins de serrage 502, 503.

Le pignon planétaire d'entrée 32 présente un logement axial 120 qui s'ouvre du côté avant, et est prévu pour pouvoir recevoir la vis 32 du mécanisme vis-écrou 3 lorsqu'elle est en position rétractée (position illustrée sur la figure).

La platine d'appui 33 présente ici sensiblement la forme d'un disque, et elle recouvre la zone de coopération entre la vis et l'écrou, au sens où elle en dépasse radialement. Elle est ici entourée par un joint à soufflet 413.

Dans le sens du serrage, la platine-piston 32 reçoit directement l'appui axial de la vis 32 du mécanisme vis-écrou. Elle est fixée à l'extrémité de la vis 32 par un moyen de fixation axiale, ici une vis centrale 333, qui assure une traction sur la platine quand la vis se déplace dans le sens du retrait. La fixation en rotation est assurée par coopération d'une forme antirotation 323 portée par l'extrémité de la vis 32 avec une forme complémentaire portée par la face arrière de la platine-piston 33. Celle-ci est elle-même maintenue en rotation par des encoches anti-rotation 335. Celles-ci sont maintenues fixes en rotation de façon connue par des plots dépassant de la face arrière du patin de serrage intérieur 502, lui-même maintenu à l'intérieur d'une chape 501.

Comme on le comprend, le manchon amortisseur 204 évite que les vibrations produites au niveau de la couronne fixe 21 soient transmises directement au manchon 401 du boîtier d'étrier 41, et limitent la transmission des vibrations produites dans le moteur et en amont de la chaîne cinématique.

Il permet aussi à cette couronne fixe 21 de prendre naturellement la position de centrage que lui impose le boîtier moteur 10, sans être trop contrainte par l'état de surface ou la géométrie intérieure du logement d'étrier 410.

Les nervures radiales A21 et les lèvres axiales A11, A12, A31, A32 améliorent l'amortissement par leur élasticité propre et grâce aux espaces de déformations qui les entourent. Elles concourent aussi à l'étanchéité entre le boîtier d'étrier 41 et l'intérieur du train épicycloïdal différentiel, aux poussières et aux fluides.

Dans l'exemple de la Fig.2, le boîtier moteur 10 est monté à plat en appui axial sur le boîtier d'étrier 41, sur sa face arrière qui entoure son logement arrière 410 recevant le réducteur 2, et fixé par exemple par des moyens connus. Selon une particularité, le boîtier moteur 10 coopère avec le boîtier d'étrier 41 à l'aide de moyens de centrage, par exemple d'un type connu.

### Deuxième mode de réalisation

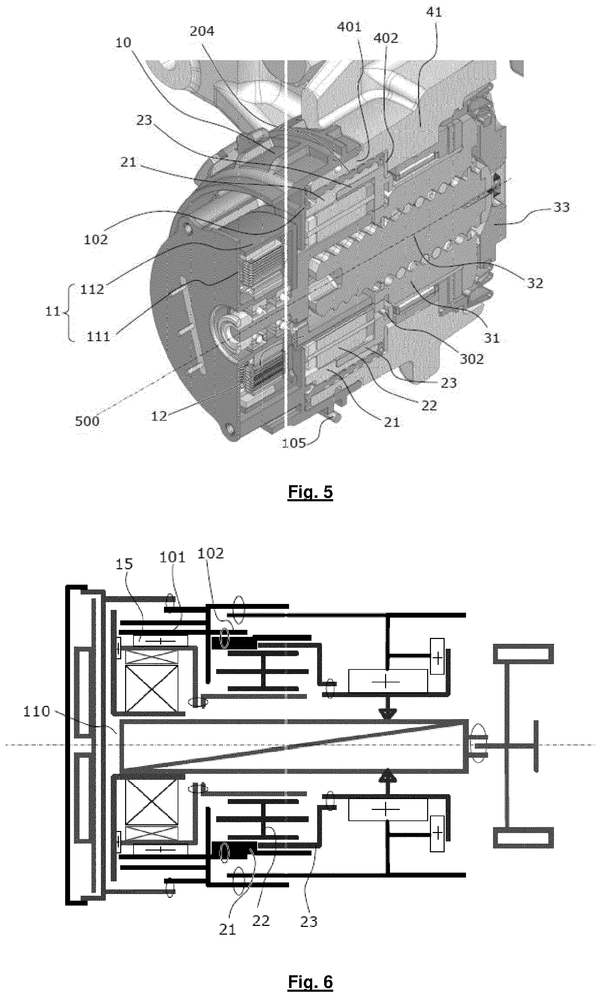

La Fig.6 illustre un deuxième exemple de mode de réalisation, qui ne sera décrit que dans ses différences.

Dans cet exemple, le moteur 11 est aussi d'un type à rotor 112 extérieur et stator intérieur 111. A la différence du premier exemple décrit, le rotor extérieur est cette fois guidé par l'extérieur. Il est monté à l'intérieur d'un palier 15 à rouleaux ou aiguilles, qui est lui-même monté à l'intérieur d'un alésage du boîtier moteur 10 (logement 110). Cette caractéristique est prévue pour être combinée avec les différentes variantes exposées ici pour le reste de l'actionneur.

Ce guidage extérieur est peu voire pas utilisé dans ce type de contexte, par exemple parce que la position du palier habituellement à l'intérieur du moteur permet de limiter la vitesse linéaire de déplacement des parties du palier entre elles.

Cependant, malgré l'encombrement radial supplémentaire généré par le palier extérieur de cet exemple de mode de réalisation, ce montage apporte des avantages nouveaux, en particulier pour ce type d'actionneur. En effet, l'espace libéré au centre du moteur permet d'allonger la course de déplacement de la vis 32 quand elle se rétracte, en prolongeant le logement 120 créé au centre du pignon planétaire 12.

En outre, le choix de guider le rotor par l'extérieur améliore la précision de son centrage par rapport au support de centrage 101 que forme pour lui le boîtier moteur 10, et donc par rapport à la couronne fixe 21 qui est solidaire de ce boîtier moteur (voir référence 162 également, correspondant à une partie de support de centrage commun). Ce meilleur centrage diminue les contraintes de précision lors de la fabrication et améliore par exemple les performances en matière acoustique et d'usure, en particulier pour ce type de réducteur différentiel à deux couronnes différentes montées sur des satellites communs.

### Troisième mode de réalisation

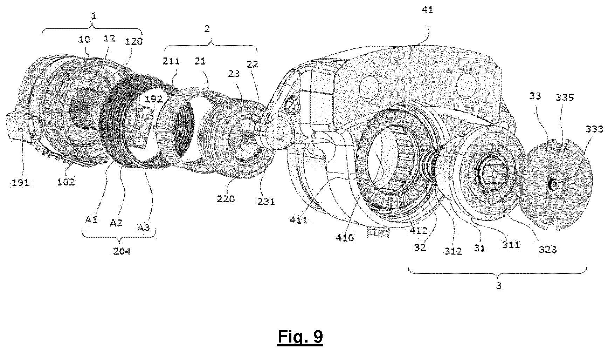

La figure 9 illustre un troisième exemple de mode de réalisation, qui ne sera décrit que dans ses différences par rapport au deuxième exemple.

Dans ce troisième exemple, le moteur est fixé au boîtier moteur 10, par l'intermédiaire d'un support de centrage commun 16 formant une pièce distinct dudit boîtier 10. Ce support de centrage est ici un tube cylindrique, par exemple réalisé dans un matériau et/ou avec des traitements lui donnant une meilleure rigidité que ce qui est utile pour le reste du boîtier moteur 10. Dans cet exemple la couronne fixe 21 est rapportée et fixée sur ce support de centrage 16 (comme indiqué par les ovales sur les figures), par exemple par emmanchement serré. Alternativement, la couronne est directement taillée dans la matière de ce support de centrage.

Bien sûr, l'invention n'est pas limitée aux exemples qui viennent d'être décrits et de nombreux aménagements peuvent être apportés à ces exemples sans sortir du cadre de l'invention.

Nomenclature :
- A1, A2: collerette d'appui axial
- A3: collerette d'appui avant
- A11, A12, A31, A32: lèvres
- 1,: groupe moteur
- 10: boîtier moteur, boîtier moteur formant support de centrage
- 101: support de centrage du boîtier moteur, pour le palier de rotor
- 102: jupe de boîtier moteur, support de centrage pour la couronne fixe
- 105: clip d'assemblage du boîtier moteur sur le boîtier d'étrier
- 11: moteur
- 110: logement intérieur du stator
- 111: stator
- 112: rotor
- 117: couvercle intermédiaire de moteur
- 118: carte électronique
- 119: couvercle radiateur
- 12: pignon planétaire creux
- 120: logement intérieur du pignon planétaire
- 13: arbre de pignon planétaire
- 14: roulements d'arbre de pignon planétaire
- 15: roulements de guidage extérieur du rotor
- 16: support de centrage commun au rotor et couronne fixe
- 162: partie du support de centrage commun, formant support de la couronne fixe
- 191: connecteurs électriques du moteur
- 2: réducteur épicycloïdal différentiel
- 204: amortisseur cylindrique
- 21: couronne fixe
- 211: encoches antirotation de la couronne fixe
- 213: jupe de la couronne fixe
- 22: satellites
- 220: bague porte-satellites
- 23: couronne mobile
- 231: cannelures d'accouplement de la couronne mobile
- 3: mécanisme vis-écrou
- 302: circlip d'assemblage de la couronne mobile avec l'écrou du vis-écrou
- 31: écrou mobile en rotation
- 311: collerette d'appui de l'écrou
- 312: rainures d'accouplement de l'écrou
- 313: billes du mécanisme vis-écrou
- 32: vis fixe en rotation
- 323: forme de couplage en rotation de l'écrou
- 33: platine d'appui - piston de frein
- 333: vis de fixation de la platine d'appui sur la vis
- 335: encoches antirotation de la platine d'appui-piston
- 4: étrier
- 401: manchon arrière du boîtier d'étrier
- 402: rondelle de glissement 402, libre en rotation
- 41: boîtier de frein, boîtier d'étrier
- 410: logement arrière de boîtier d'étrier
- 411: butée axiale à roulement
- 412: palier de guidage à roulement
- 413: joint d'étanchéité antipoussière du piston
- 42: nez d'étrier, branche extérieure d'étrier
- 43: vis d'assemblage du nez d'étrier sur le boîtier d'étrier
- 500: direction d'actionnement linéaire
- 501: chape
- 502: patin de serrage intérieur
- 503: patin de serrage extérieur
- 509: disque de frein
- 51: frein (M1)
- F1: effort de serrage

## Revendications

1. Dispositif de réducteur ou motoréducteur rotatif d'entraînement au sein d'un actionneur électrique de frein réalisant un déplacement linéaire d'un piston de frein (33), ledit dispositif étant intégré dans un boîtier de frein (41) ou prévu pour être assemblé sur un tel boîtier de frein,
ledit dispositif comprenant un ou plusieurs trains épicycloïdaux (2) parallèles ou coaxiaux à la direction d'actionnement linéaire (500),
qui utilisent au moins une couronne (21) fixe en rotation par rapport audit boîtier de frein (41),
**caractérisé en ce qu'**il comprend un dispositif d'amortissement (204) réalisé au moins en partie en matériau élastomère,
qui est disposé autour de ladite couronne fixe (21) ou prévu pour être disposé ainsi,
de façon à être comprimé radialement et/ou axialement entre ladite couronne fixe (21) et ledit boîtier de frein (41), et
réalisant ainsi un amortissement vibratoire radial et/ou axial entre ladite couronne fixe et ledit boîtier de frein.

2. Dispositif selon la revendication précédente, **caractérisé en ce que** la surface intérieure et/ou extérieure du dispositif d'amortissement (204) porte une ou plusieurs nervures périphériques (A21) qui sont comprimées radialement une fois en place, notamment dont chacune présente une continuité sur toute la périphérie de façon à produire une étanchéité axiale.

3. Dispositif selon l'une quelconque des revendications précédentes, **caractérisé en ce que** le dispositif d'amortissement comprend un manchon cylindrique (A2) entourant la couronne fixe (21) ou un support de la couronne fixe (102, 162), et qui présente une collerette d'appui axial (A1, A2) à une extrémité dudit cylindre ou à ses deux extrémités, de façon à être comprimé axialement entre ladite couronne fixe (21) et ledit boîtier de frein (41).

4. Dispositif selon la revendication précédente, **caractérisé en ce qu'**au moins une collerette d'appui axial (A1, A2) présente, sur sa surface extérieure, une ou plusieurs lèvres (A11, A12, A31, A32) s'étendant au moins axialement, notamment présentant une continuité sur toute la périphérie de façon à produire une étanchéité radiale.

5. Dispositif selon l'une quelconque des revendications précédentes, **caractérisé en ce que** le dispositif d'amortissement comprend une armature intérieure noyée dans l'élastomère et présentant une rigidité et/ou élasticité supérieure à celle de l'élastomère, notamment une armature métallique.

6. Dispositif selon l'une quelconque des revendications précédentes, **caractérisé en ce que** la couronne fixe (21) est maintenue en rotation par un boîtier moteur (10) qui porte un moteur électrique (11) entraînant le réducteur, lequel boîtier moteur (10) forme une pièce rapportée qui est assemblée au boîtier de frein (41) de façon à mettre en compression le dispositif d'amortissement.

7. Dispositif selon l'une quelconque des revendications précédentes, **caractérisé en ce qu'**il comprend un réducteur planétaire dit différentiel (2), qui est coaxial au moteur et est entraîné en entrée par un pignon planétaire (12), qui entraîne un groupe de satellites (22) qui engrènent chacun à la fois sur la couronne fixe (21) et sur une couronne mobile (23), lesquelles couronnes (21, 23) portent des nombres de dents différents l'une de l'autre,
laquelle couronne mobile (23) entraîne en rotation un mécanisme vis-écrou (3) qui produit un entraînement linéaire d'un piston de frein entre une position rétractée et une position sortie,
de façon à exercer un appui linéaire dans une direction dite avant pour produire un effort de serrage (F1) sur un disque entre des patins de serrage (502, 503).

8. Dispositif selon la revendication précédente, **caractérisé en ce que** le réducteur planétaire (2) entraîne en rotation un mécanisme vis-écrou (3) agencé pour être réversible, lequel transforme ladite rotation en un déplacement linéaire appliqué au piston de frein.

9. Dispositif selon l'une quelconque des revendications 7 à 8, **caractérisé en ce que** la couronne mobile (23) du réducteur planétaire (2) entraîne en rotation l'écrou (31) du mécanisme vis-écrou, lequel écrou est maintenu en translation par un épaulement formé dans un logement (410) du boîtier d'étrier, tandis que sa vis (32) est maintenue immobile en rotation par le piston de frein (33), et est ainsi entraînée en translation par la rotation dudit écrou.

10. Dispositif d'amortissement agencé pour réaliser le dispositif d'amortissement (204) d'un dispositif de réducteur selon l'une quelconque des revendications 1 à 9, ledit dispositif d'amortissement étant réalisé au moins en partie en matériau élastomère et est apte à être disposé autour d'une couronne fixe (21) dudit dispositif réducteur de façon à être comprimé radialement et/ou axialement entre ladite couronne fixe (21) et un boîtier de frein (41) quand ledit dispositif réducteur est intégré dans ledit boitier de frein, ledit dispositif d'amortissement réalisant ainsi un amortissement vibratoire radial et/ou axial entre ladite couronne fixe et ledit boîtier de frein.

11. Dispositif de motoréducteur pour actionneur de frein, **caractérisé en ce qu'**il comprend un dispositif selon l'une quelconque des revendications 1 à 9.

12. Frein à disque pour véhicule routier, notamment de type coulissant ou flottant pour véhicule routier ou automobile, **caractérisé en ce qu'**il comprend un dispositif selon l'une quelconque des revendications 1 à 9 ou un dispositif de motoréducteur selon la revendication 11.

13. Procédé d'assemblage d'un frein pour véhicule, notamment automobile routier, **caractérisé en ce qu'**il comprend :
montage sur un boîtier moteur (10) d'un moteur électrique (11) portant un arbre de pignon planétaire (12) formant ainsi un groupe moteur (1), ou fourniture d'un tel groupe moteur ; et
assemblage du boîtier moteur (10) dudit groupe moteur (1) sur le boîtier de frein (41),
en montant entre eux un ou plusieurs trains épicycloïdaux parallèles ou coaxiaux formant un dispositif de réducteur selon l'une quelconque des revendications 1 à 9, dont la couronne fixe (21) est maintenue en rotation par ledit boîtier moteur (10),
de façon à ce que le dispositif d'amortissement (204) soit comprimé radialement et/ou axialement entre ledit boîtier de frein (41) et la couronne fixe (21) ou son support (102, 162).

## Patentansprüche

1. Antriebsdrehgetriebe- oder Getriebemotorvorrichtung innerhalb eines elektrischen Bremsaktuators, der eine lineare Bewegung eines Bremskolbens (33) ausführt, wobei die Vorrichtung in ein Bremsgehäuse (41) integriert ist oder zum Montiertwerden an einem solchen Bremsgehäuse vorgesehen ist,
die Vorrichtung umfassend ein oder mehrere Planetenradsätze (2), die parallel oder koaxial zu der linearen Betätigungsrichtung (500) sind,
die mindestens ein festes Hohlrad (21) verwenden, das relativ zu dem Bremsgehäuse (41) drehfest ist,
**dadurch gekennzeichnet, dass** sie eine Dämpfungsvorrichtung (204) umfasst, die mindestens teilweise aus einem elastomeren Material ausgeführt ist,
die um das feste Hohlrad (21) herum eingerichtet ist oder dazu vorgesehen ist, so eingerichtet zu werden,
so dass sie zwischen dem festen Hohlrad (21) und dem Bremsgehäuse (41) radial und/oder axial zusammengedrückt wird, und
wobei so eine radiale und/oder axiale Schwingungsdämpfung zwischen dem festen Hohlrad und dem Bremsgehäuse ausgeführt wird.

2. Vorrichtung nach dem vorstehenden Anspruch, **dadurch gekennzeichnet, dass** die Innen- und/oder die Außenoberfläche der Dämpfungsvorrichtung (204) eine oder mehrere Umfangsrippen (A21) trägt, die radial zusammengedrückt werden, sobald sie platziert sind, insbesondere wobei jede über den gesamten Umfang eine Kontinuität aufweist, um eine axiale Abdichtung zu erzeugen.

3. Vorrichtung nach einem der vorstehenden Ansprüche, **dadurch gekennzeichnet, dass** die Dämpfungsvorrichtung eine zylindrische Hülse (A2) umfasst, die das feste Hohlrad (21) oder eine Halterung des festen Hohlrads (102, 162) umschließt, und die an einem Ende des Zylinders oder an seinen zwei Enden einen axialen Stützflansch (A1, A2) aufweist, um zwischen dem festen Hohlrad (21) und dem Bremsgehäuse (41) axial zusammengedrückt zu werden.

4. Vorrichtung nach dem vorstehenden Anspruch, **dadurch gekennzeichnet, dass** mindestens ein axialer Stützflansch (A1, A2) an seiner Außenoberfläche eine oder mehrere Lippen (A11, A12, A31, A32) aufweist, die sich mindestens axial erstrecken, die insbesondere über den gesamten Umfang eine Kontinuität aufweisen, um eine radiale Abdichtung zu erzeugen.

5. Vorrichtung nach einem der vorstehenden Ansprüche, **dadurch gekennzeichnet, dass** die Dämpfungsvorrichtung eine Innenverstärkung umfasst, die in das Elastomer eingebettet ist und eine höhere Steifigkeit und/oder Elastizität als das Elastomer aufweist, insbesondere eine metallische Verstärkung.

6. Vorrichtung nach einem der vorstehenden Ansprüche, **dadurch gekennzeichnet, dass** das feste Hohlrad (21) durch ein Motorgehäuse (10) in Drehung beibehalten wird, das einen Elektromotor (11) trägt, der das Getriebe antreibt, wobei das Motorgehäuse (10) ein zugefügtes Teil ausbildet, das an dem Bremsgehäuse (41) so montiert ist, dass es die Dämpfungsvorrichtung zusammendrückt.

7. Vorrichtung nach einem der vorstehenden Ansprüche, **dadurch gekennzeichnet, dass** sie ein sogenanntes Differenzialplanetengetriebe (2) umfasst, das koaxial zu dem Motor angeordnet ist und an einem Eingang durch ein Planetenritzel (12) angetrieben wird, das eine Gruppe von Planetenrädern (22) antreibt, die jeweils gleichzeitig mit dem festen Hohlrad (21) und mit einem beweglichen Hohlrad (23) kämmen, wobei die Hohlräder (21, 23) jeweils voneinander verschiedene Anzahlen von Zähnen tragen, wobei das bewegliche Hohlrad (23) einen Schraubenmuttermechanismus (3) in Drehung antreibt, der einen linearen Antrieb eines Bremskolbens zwischen einer eingefahrenen und einer ausgefahrenen Position erzeugt,
um eine lineare Unterstützung zum Erzeugen einer Klemmkraft (F1) auf eine Scheibe zwischen Klemmbacken (502, 503) in einer sogenannten Vorwärtsrichtung auszuüben.

8. Vorrichtung nach dem vorstehenden Anspruch, **dadurch gekennzeichnet, dass** das Planetengetriebe (2) einen Schraubenmuttermechanismus (3) in Drehung antreibt, der angeordnet ist, um umkehrbar zu sein, wobei die Drehung in eine lineare Bewegung umgewandelt wird, die auf den Bremskolben angewendet wird.

9. Vorrichtung nach einem der Ansprüche 7 oder 8, **dadurch gekennzeichnet, dass** das bewegliche Hohlrad (23) des Planetengetriebes (2) die Mutter (31) des Schraubenmuttermechanismus in Drehung antreibt, wobei die Mutter durch eine Schulter, die in einer Aufnahme (410) des Bremssattelgehäuses ausgebildet ist, in Translation beibehalten wird, während seine Schraube (32) durch den Bremskolben (33) drehsicher gehalten wird und so durch die Drehung der Mutter in Translation angetrieben wird.

10. Dämpfungsvorrichtung, die zum Herstellen der Dämpfungsvorrichtung (204) einer Getriebevorrichtung nach einem der Ansprüche 1 bis 9 angeordnet ist, wobei die Dämpfungsvorrichtung mindestens teilweise aus einem elastomeren Material ausgeführt ist und geeignet ist, um ein festes Hohlrad (21) der Getriebevorrichtung herum eingerichtet zu sein, sodass sie radial und/oder axial zwischen dem festen Hohlrad (21) und einem Bremsgehäuse (41) zusammengedrückt wird, wenn die Getriebevorrichtung in das Bremsgehäuse integriert ist, wobei die Dämpfungsvorrichtung so eine radiale und/oder axiale Schwingungsdämpfung zwischen dem festen Hohlrad und dem Bremsgehäuse herstellt.

11. Getriebemotorvorrichtung für den Bremsaktuator, **dadurch gekennzeichnet, dass** sie eine Vorrichtung nach einem der Ansprüche 1 bis 9 umfasst.

12. Scheibenbremse für ein Straßenfahrzeug, insbesondere von der gleitenden oder schwimmenden Art für ein Straßen- oder Kraftfahrzeug, **dadurch gekennzeichnet, dass** sie eine Vorrichtung nach einem der Ansprüche 1 bis 9 oder eine Getriebemotorvorrichtung nach Anspruch 11 umfasst.

13. Verfahren zum Montieren einer Bremse für ein Fahrzeug, insbesondere für ein Straßenkraftfahrzeug, **dadurch gekennzeichnet, dass** es umfasst:
Anbringen auf einem Motorgehäuse (10) eines Elektromotors (11), der eine Planetengetriebewelle (12) trägt, wobei so eine Motorgruppe (1) ausgebildet wird, oder Bereitstellen einer solchen Motorgruppe; und
Montieren des Motorgehäuses (10) der Motorgruppe (1) auf dem Bremsgehäuse (41), durch Anbringen dazwischen eines oder mehrerer paralleler oder koaxialer Planetenradsätze, die eine Getriebevorrichtung nach einem der Ansprüche 1 bis 9 ausbilden, deren festes Hohlrad (21) durch das Motorgehäuse (10) in Drehung beibehalten wird,
sodass die Dämpfungsvorrichtung (204) zwischen dem Bremsgehäuse (41) und dem festen Hohlrad (21) oder seiner Halterung (102, 162) radial und/oder axial zusammengedrückt wird.

## Claims

1. A rotary drive reduction gear or geared motor device within an electric brake actuator effecting linear displacement of a brake piston (33), said device being integrated into a brake housing (41) or intended to be assembled on such a brake housing,
said device comprising one or more planetary gear sets (2) parallel or coaxial to the linear actuation direction (500),
which use at least one ring gear (21) that is fixed against rotation relative to said brake housing (41),
**characterized in that** it comprises a damping device (204) made at least in part of elastomer material,
which is arranged around said fixed ring gear (21) or is designed to be so arranged,
so as to be compressed radially and/or axially between said fixed ring gear (21) and said brake housing (41), and
thus providing radial and/or axial vibration damping between said fixed ring gear and said brake housing.

2. The device according to the preceding claim, **characterized in that** the inner and/or outer surface of the damping device (204) carries one or more peripheral ribs (A21) which are radially compressed once in place, in particular each of which has continuity over the entire periphery so as to produce an axial seal.

3. The device according to any one of the preceding claims, **characterized in that** the damping device comprises a cylindrical sleeve (A2) surrounding the fixed ring gear (21) or a support of the fixed ring gear (102, 162), and which has an axial bearing flange (A1, A2) at one end of said cylinder or at both its ends, so as to be axially compressed between said fixed ring gear (21) and said brake housing (41).

4. The device according to the preceding claim, **characterized in that** at least one axial bearing flange (A1, A2) has, on its outer surface, one or more lips (A11, A12, A31, A32) extending at least axially, in particular with continuity over the entire periphery, so as to produce a radial seal.

5. The device according to any one of the preceding claims, **characterized in that** the damping device comprises an inner reinforcement embedded in the elastomer and having a rigidity and/or elasticity greater than that of the elastomer, in particular a metal reinforcement.

6. The device according to any one of the preceding claims, **characterized in that** the fixed ring gear (21) is held against rotation by a motor housing (10), which carries an electric motor (11) driving the reduction gear, which motor housing (10) forms an insert which is assembled to the brake housing (41) so as to compress the damping device.

7. The device according to any one of the preceding claims, **characterized in that** it comprises a so-called differential planetary reduction gear (2), which is coaxial with the motor and which is driven at the input by a sun gear (12), which drives a group of planet gears (22), each of which meshes with both the fixed ring gear (21) and a movable ring gear (23), which ring gears (21, 23) have different numbers of teeth from one another,
which movable ring gear (23) rotates a screw-nut mechanism (3) which produces a linear drive of a brake piston between a retracted position and an extended position,
so as to exert linear pressure in a forward direction to produce a clamping force (F1) on a disc between clamping pads (502, 503).

8. The device according to the preceding claim, **characterized in that** the differential planetary reduction gear (2) rotates a reversible screw-nut mechanism (3), which transforms said rotation into a linear displacement applied to the brake piston.

9. The device according to any one of claims 7 to 8, **characterized in that** the movable ring gear (23) of the planetary reduction gear (2) rotates the nut of the screw-nut mechanism (31), which is held against translation by a shoulder formed in a recess (410) of the caliper housing, while its screw (32) is held immobile against rotation by the brake piston (33), and is thus driven in translation by the rotation of said nut.

10. A damping device arranged to produce the damping device (204) of a reduction gear device according to any one of claims 1 to 9, said damping device being made at least in part of elastomeric material and is adapted to be arranged around a fixed ring gear (21) of said reduction device so as to be compressed radially and/or axially between said fixed ring gear (21) and a brake housing (41) when said reduction gear device is integrated into said brake housing, said damping device thus providing radial and/or axial vibration damping between said fixed ring gear and said brake housing.

11. A geared motor device for a brake actuator, **characterized in that** it comprises a device according to any one of claims 1 to 9.

12. A disc brake for a road vehicle, in particular of the sliding or floating type for a road vehicle or motor vehicle, **characterized in that** it comprises a reduction gear or geared motor device according to any one of claims 1 to 9 or a geared motor device according to claim 11.

13. A method for assembling a brake for a vehicle, in particular a road vehicle, **characterized in that** it comprises:
mounting an electric motor (11) carrying a sun gear shaft (12) on a motor housing (10), thus forming a motor unit (1), or providing such a motor unit; and
assembling the motor housing (10) of said motor unit (1) on the brake housing (41),
by interconnecting one or more parallel or coaxial planetary gear sets to form a reduction gear according to any one of claims 1 to 9, the fixed ring gear (21) of which is held against rotation by said motor housing (10),
so that the damping device (204) is compressed radially and/or axially between said brake housing (41) and the fixed ring gear (21) or its support (102, 162).
